# FASCICULE DE BREVET EUROPEEN

(11) **EP 3 610 644 B1**
(45) Date de publication et mention de la délivrance du brevet: **30.03.2022**
(21) Numéro de dépôt: 18720319.5
(22) Date de dépôt: 11.04.2018
(51) Int. Cl.: H04N 9/31, G02B 27/09

(54) **PROJECTEUR DE GRANDE PUISSANCE A SOURCE LUMIÈRE LASER DÉPORTÉE**
HOCHLEISTUNGSPROJEKTOR MIT OFFSETLASERQUELLE
HIGH-POWER PROJECTOR WITH OFFSET LASER SOURCE

(30) Priorité: 14.04.2017 FR 1753306
(43) Date de publication de la demande: 19.02.2020
(73) Titulaire: Xyzed, 75018 Paris (FR)
(72) Inventeur: REBIFFE, Maurice, 75018 Paris (FR)
(74) Mandataire: Cabinet Beau de Loménie
(86) Numéro de dépôt international: PCT/FR2018/050908
(87) Numéro de publication internationale: WO 2018/189482

(56) Documents cités:
- EP-A2- 1 389 018
- GB-A- 2 462 444
- JP-A- 2010 243 590
- JP-B2- 3 445 047
- US-A1- 2007 252 918
- US-A1- 2011 216 286
- US-A1- 2012 086 917

## Description

La présente invention se rapporte au domaine de l'éclairage et elle concerne plus particulièrement les projecteurs vidéo/cinéma ou les projecteurs lumières de théâtre ou de spectacle comportant une source de lumière laser autorisant une grande puissance d'éclairage.

### Art antérieur

Jusqu'il y a encore quelques années, les projecteurs lumières de spectacle étaient classiquement constitués d'une lampe à incandescence ou d'une lampe à décharge type Xénon, Mercure, HMI ou HTI, et d'un réflecteur pour orienter le faisceau lumineux issu de cette lampe vers un système optique comportant une ou plusieurs lentilles disposées les unes derrière les autres dans le faisceau lumineux.

Récemment, sont apparus sur le marché de l'éclairage, notamment cinéma et vidéo numérique, des projecteurs dont les sources lumière, destinées à remplacer ces lampes à décharge ou à incandescence, sont des LEDs ou des diodes lasers, ces dernières étant plus particulièrement utilisées lorsqu'une grande puissance d'éclairage est visée (typiquement des intensités lumineuses supérieures à 10000 lumens). Ces sources lumières lasers sont essentiellement divisées en deux types : les sources dites Phosphore et les sources dites RGB.

Les sources phosphores sont alimentées par des diodes laser bleu (430 - 470 nm environ) et comportent une roue de phosphore pour reconstituer les couleurs rouge et vert. Leur plan focal (en général compris dans une fourchette de 4000 à 5000 microns) ne permet pas actuellement de regrouper plusieurs modules individuels (aujourd'hui chacun limité à des puissances de l'ordre de 10000 à 15000 lumens) en un seul sauf à utiliser des renvois de miroir qui engendrent des pertes de puissance conséquentes. En outre, les sources phosphores doivent être à proximité du moteur de projection (la tête vidéo comportant le modulateur de lumière) et l'association de plusieurs sources phosphores individuelles implique donc des ensembles volumineux, lourds, et bruyants.

Les sources RGB sont quant à elles alimentées par des diodes bleu, verte et rouge. Il est en outre facile de focaliser les faisceaux de plusieurs diodes RGB en un seul point, le plan focal de l'ordre de 300 à 1000 microns permettant de collecter la lumière de sortie dans une fibre unique de même diamètre, le diamètre maximal d'une fibre étant à ce jour de l'ordre de 1500 microns.

JP 2010 243590 A divulgue un projecteur comportant une pluralité de sources lumières lasers et un moteur de projection muni en entrée d'un tunnel intégrateur, dans lequel ladite pluralité de sources lumières lasers est reliée de façon déportée au moteur de projection au travers d'un faisceau de fibres optiques et une plaque d'homogénéisation.

En regroupant plusieurs fibres en un seul faisceau ou « bundle », il est ainsi possible de générer des puissances conséquentes. Mais cette technique est contraignante et particulièrement couteuse du fait notamment de la constitution actuelle monobloc des projecteurs.

Ces raisons font qu'à ce jour les projecteurs, vidéo/cinéma ou lumière, sont tous limités en puissance.

### Objet et définition de l'invention

La présente invention propose de s'affranchir de cette contrainte avec un projecteur permettant de délivrer une grande puissance d'éclairage, typiquement de 15 000 à 60 000 lumens, ou équivalente à des lampes à décharge de 4 à 6 KW (Type HMI - Xénon). Un autre but de l'invention est de pouvoir mettre en œuvre un tel projecteur à partir de tout type de source lumière comme les sources lasers RGB dont des tolérances optiques et mécaniques sont alors relâchées.

Ces buts sont atteints par un projecteur comportant une pluralité de sources lumières lasers et un moteur de projection muni en entrée d'un tunnel intégrateur, caractérisé en ce que ce que ladite pluralité de sources lumières lasers est reliée de façon déportée au moteur de projection au travers d'un faisceau de fibres optiques comportant une même pluralité d'entrées et une sortie unique, ledit faisceau de fibres étant fusionné au niveau de chacune desdites entrées et de ladite sortie unique pour en éliminer les espaces inter-fibres et en ce que chacune des entrées ainsi fusionnées de ladite pluralité d'entrées du faisceau de fibres optiques est disposée au niveau d'un plan focal de sortie de chacune des sources lumières lasers de ladite pluralité de sources lumières lasers et ladite sortie unique ainsi fusionnée du faisceau de fibres optiques est mise en contact direct avec une plaque d'homogénéisation prise en sandwich entre ladite sortie unique fusionnée et l'entrée du tunnel intégrateur.

Ainsi, en disposant un faisceau de fibres optiques au plan focal de la source lumière laser, il devient possible de recourir à tout type de source et notamment une source phosphore et en fusionnant ces fibres, on peut alors obtenir facilement une grande ouverture numérique et une puissance d'éclairage élevée.

De préférence, les différentes entrées fusionnées et la sortie unique fusionnée du faisceau de fibres optiques présentent chacune une ouverture numérique supérieure à 0,26 et pouvant atteindre 0,37 et plus.

Avantageusement, les différentes entrées fusionnées du faisceau de fibres optiques ont chacune une section circulaire et l'unique sortie fusionnée du faisceau de fibres optiques a une section rectangulaire. Le diamètre de la section circulaire de chacune des différentes entrées fusionnées est supérieur à 4mm.

De préférence, la section circulaire présente un diamètre supérieur au diamètre du plan focal de sortie de la source lumière laser considérée et la section rectangulaire présente une longueur égale ou inférieure à une section d'entrée du tunnel intégrateur.

Avantageusement, le faisceau de fibres optiques comporte plusieurs milliers à plusieurs dizaines de milliers de fibres optiques de diamètre standard compris entre 100 et 200 microns.

De préférence, la plaque d'homogénéisation comporte un angle de diffusion compris entre 2 et 10°.

Avantageusement, la plaque d'homogénéisation est fixée sur un support solidaire du moteur de projection.

De préférence, les sources lumières lasers sont de type RGB ou phosphore et le moteur de projection comporte l'un des modulateurs de lumière suivants : matrice DMD, matrice LCD, matrices tri-LCD, matrices Tri-DMD, matrice Lcos et matrice D-ILA.

### Brève description des dessins

Les caractéristiques et avantages de la présente invention ressortiront mieux de la description suivante, faite à titre indicatif et non limitatif, en regard des dessins annexés sur lesquels :
- la figure 1 est un schéma de principe d'un projecteur à source lumière déportée conforme à l'invention,
- la figure 2 est une vue de détail d'un faisceau de fibres optiques déportant les sources lumières lasers du moteur de projection,
- les figures 2A et 2B sont des vues en bout d'une entrée fusionnée et de la sortie unique fusionnée du faisceau de fibres optiques de la figure 2, et
- la figure 3 illustre la fixation d'une plaque d'homogénéisation relayant la sortie unique fusionnée du faisceau de fibres optiques en entrée du moteur de projection.

### Description détaillée d'un mode de réalisation préférentiel

L'invention repose sur le principe de séparer la source lumière laser, qu'elle soit de type phosphore ou RGB, du moteur de projection par un faisceau (ou bundle) de fibres optiques formé de plusieurs centaines à plusieurs milliers de petites fibres optiques standards (100/200 microns) et dont les extrémités du faisceau sont fusionnées pour offrir une ouverture numérique importante (ON de 0,37 et au-delà), le diamètre d'entrée du faisceau étant adapté au plan focal de la source lumière laser utilisée (au moins 4 mm pour une source lumière phosphore par exemple) et ce faisceau étant préférentiellement de très grande longueur (jusqu'à plusieurs centaines de mètres) afin de permettre un déport du bruit de ventilation des sources lumières lasers.

Le couplage de plusieurs sources lumières de petites puissances permet d'atteindre des intensités lumineuses égales voire supérieures à 60 000 lumens pour des projecteurs vidéo/cinéma, ou des puissances optiques égales ou supérieures à 4 à 6 kW pour des projecteurs lumière.

Toutefois, un simple regroupement de fibres optiques standard ne permet pas d'optimiser le rendement du fait de l'épaisseur des gaines qui laisse des interstices entre les fibres engendrant une perte conséquente de rendement. Aussi, l'invention propose de fusionner les extrémités de ces fibres.

En entrée, en fusionnant plusieurs fibres optiques standard en un faisceau unique de fibres, il devient possible d'atteindre des diamètres de fibre impossibles à obtenir avec une seule fibre (les fibres uniques ont des diamètres de 1500 microns maximum) et de conjuguer une large étendue de longueur d'onde dans le visible (420 - 640 nm), ce qui permet un relâchement des tolérances optiques et mécaniques. En sortie cette fusion créée un faisceau à sortie unique ayant une section de sortie appropriée à la section d'entrée du condenseur (ou rod intégrateur) du moteur de projection et qui, en intercalant un unique diffuseur/homogénéisateur entre ces deux parties, permet d'optimiser la puissance délivrée et le rendement obtenu. Par fusion de fibres on entend un regroupement de plusieurs fibres silice en un seul faisceau. Les faisceaux de fibres silice sont fusionnées à chaque extrémité afin d'éliminer les espaces inter-fibre, sans avoir recours à des colles, ou autres types de matières dont les propriétés inhérentes sont limitantes, tout en augmentant l'ouverture numérique des fibres (passage d'une ON de 0,26 pour une fibre simple à 0,37 et plus pour un faisceau fusionné). Les faisceaux ainsi fusionnés aux extrémités (entre ces extrémités les fibres restent indépendantes les unes des autres) augmentent généralement la transmission de 50% et sont utilisés dans des applications avec des températures allant jusqu'à 1500°C.

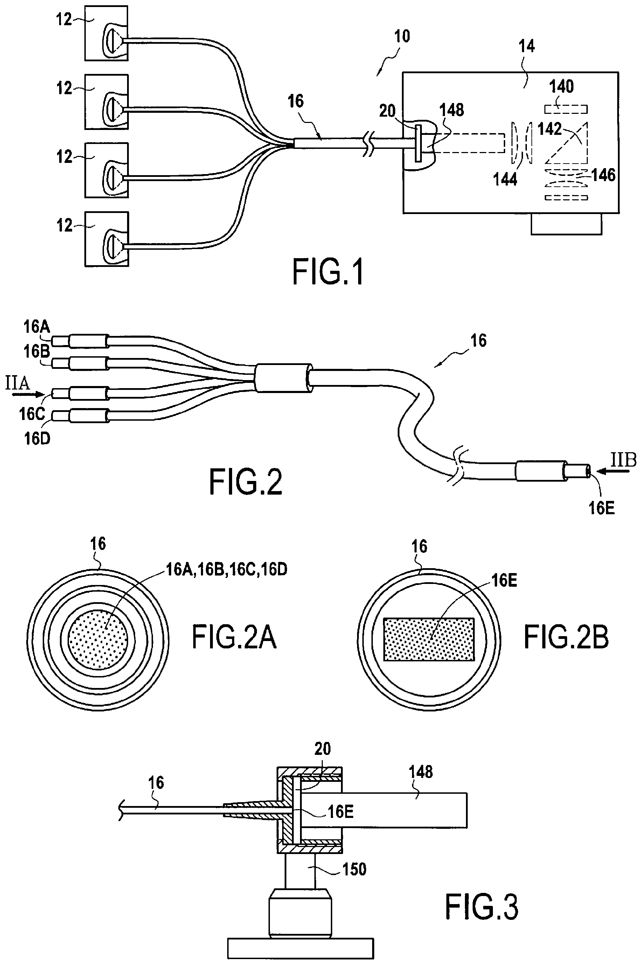

La figure 1 illustre une structure de projecteur conforme à la présente invention. Ce projecteur 10 est formé de trois parties : une ou plusieurs sources lumières lasers 12, un moteur de projection 14 et un faisceau fusionné de fibres optiques 16 pour assurer le transport de la lumière blanche de la source lumière au moteur de projection ainsi déporté de la source.

La source lumière laser 12 peut être une source lumière phosphore du type de celle commercialisée par la société Digital Projection UK et délivrant en sortie un faisceau de lumière blanche en un point focal déterminé. Il peut s'agir également d'une source lumière laser RGB telle que décrite dans la demande WO2016/113490 ou la demande WO2016/156759, l'une et l'autre déposées au nom de la demanderesse et permettant de concentrer différents faisceaux de lumière issus de diodes RGB en un point focal déterminé en sortie de cette source lumière laser.

Le moteur de projection 14 est organisé classiquement autour d'un modulateur de lumière 140, d'un prisme 142 et d'un bloc optique 144 comportant notamment des lentilles de projection 146 formant l'objectif du projecteur. Le modulateur de lumière est classiquement une matrice DMD (digital micromirror device) mais d'autres configurations peuvent aussi être utilisées comme une matrice LCD, Lcos ou D-ILA et des matrices tri-LCD ou tri-DMD. Quelle que soit la configuration retenue un tunnel intégrateur ou rod 148 est toujours présent en entrée du chemin optique pour assurer un meilleur alignement et une uniformité spatiale comme dans les systèmes à lampe de l'art antérieur.

Le faisceau fusionné de fibres optiques 16 illustré plus en détail figure 2 permet le couplage d'une ou plusieurs sources lumières lasers en fonction des besoins de puissance.

Notamment, le nombre des entrées fusionnées 16A, 16B, 16C, 16D du faisceau dépend de la puissance totale souhaitée et de celle de chacune des sources lumières lasers phosphore ou RGB. Par exemple, une source lumière laser RGB du type de celle décrite dans la demande WO2016/156759 précitée délivrant une puissance optique de 20 à 40W (voire plus) par couleur RGB permettra d'obtenir une puissance de projection de 60 à 120W ou plus par entrée, soit en sortie des puissances de 240 à 480W et plus.

Le diamètre d'entrée du faisceau (voir la figure 2A) dépend du type de source lumière lasers utilisé donc des dimensions du plan focal. Ainsi, on choisira au moins un diamètre d'entrée de 6mm pour une source lumière laser phosphore dont le plan focal est au minimum compris entre 4 et 5 mm. Ce diamètre d'entrée définira le nombre de fibres fusionnées nécessaires, de plusieurs centaines (soit environ 400 fibres de 200 microns pour un diamètre de 4 mm) à plusieurs milliers (soit environ 3500 fibres de 100 microns pour un diamètre de 6 mm) pour un diamètre de fibre unitaire standard de 100 à 200 microns par exemple.

De même, la taille du faisceau de sortie fusionnée 16E dépend du nombre total de fibres unitaires fusionnées (14000 fibres dans l'exemple à quatre entrées immédiatement précédent) et de la section du tunnel intégrateur 148. Enfin, pour augmenter la performance, la forme du faisceau de sortie est adaptée à celle de la matrice de projection (puce DMD par exemple) et donc préférentiellement avec une section rectangulaire (voir la figure 2B) proportionnelle à celle de la matrice et de longueur égale ou inférieure à la section du tunnel intégrateur. Toutefois, une section ovale/elliptique ou de tout type de forme géométrique, dès lors que le diamètre le plus large est égal ou inférieur à la section du tunnel intégrateur, est aussi possible.

En sortie de la fibre fusionnée est disposée en contact direct une plaque d'homogénéisation 20 destinée à assurer une répartition parfaite des couleurs ainsi qu'une parfaite répartition de la lumière. Il convient de noter que cette plaque d'homogénéisation n'a pas pour objet de rendre «divergente» la lumière cohérente issue du de la fibre fusionnée, cette divergence étant assurée en aval par le biais du prisme du moteur de projection, mais de permettre un étalement régulier du flux lumineux sur la surface de projection (95% centre/périphérie de la surface de projection).

Comme le montre la figure 3, la plaque d"homogénéisation avantageusement fixée sur un support 150 solidaire du moteur de projection est prise en sandwich entre la sortie de la fibre fusionnée 16E et l'entrée du tunnel intégrateur 148. Pour l'optimisation du rendement lumineux, elle doit présenter un angle de diffusion compris entre 2° et 10° en entrée du tunnel intégrateur et doit pouvoir accepter un angle de divergence de la fibre fusionnée de 6° à 15°. Une telle plaque d"homogénéisation est disponible par exemple sous la référence RH-215-I-Y-A de la société Holo-OR Ltd.

La configuration aussi obtenue est simple avec des rendements de 60 à 75% supérieurs à ceux des dispositifs de l'art antérieur tout en présentant des coûts particulièrement réduits. Elle est soumise à peu de contrainte, seul l'alignement dans l'axe du tunnel intégrateur étant requis et encore avec une tolérance assez souple. A noter également que ce montage permet de raccourcir physiquement la longueur de ce tunnel intégrateur.

## Revendications

1. Projecteur comportant une pluralité de sources lumières lasers (12) et un moteur de projection (14) muni en entrée d'un tunnel intégrateur (148), **caractérisé en ce que** ce que ladite pluralité de sources lumières lasers est reliée de façon déportée au moteur de projection au travers d'un faisceau de fibres optiques (16) comportant une même pluralité d'entrées (16A, 16B, 16C, 16D) et une sortie unique (16E), ledit faisceau de fibres étant fusionné au niveau de chacune desdites entrées et de ladite sortie unique pour en éliminer les espaces inter-fibres et **en ce que** chacune des entrées ainsi fusionnées (16A, 16B, 16C, 16D) de ladite pluralité d'entrées du faisceau de fibres optiques (16) est disposée au niveau d'un plan focal de sortie de chacune des sources lumières lasers de ladite pluralité de sources lumières lasers et ladite sortie unique ainsi fusionnée (16E) du faisceau de fibres optiques (16) est mise en contact direct avec une plaque d'homogénéisation (20) prise en sandwich entre ladite sortie unique fusionnée (16E) et l'entrée du tunnel intégrateur (148).

2. Projecteur selon la revendication 1, **caractérisé en ce que** les différentes entrées fusionnées (14A, 16B, 16C, 16D) et la sortie unique fusionnée (16E) du faisceau de fibres optiques (16) présentent chacune une ouverture numérique supérieure à 0,26 et pouvant atteindre 0,37 et plus.

3. Projecteur selon la revendication 1 ou la revendication 2, **caractérisé en ce que** les différentes entrées fusionnées (14A, 16B, 16C, 16D) du faisceau de fibres optiques (16) ont chacune une section circulaire et l'unique sortie fusionnée (16E) du faisceau de fibres optiques a une section rectangulaire.

4. Projecteur selon la revendication 3, **caractérisé en ce que** la section circulaire présente un diamètre supérieur au diamètre du plan focal de sortie de la source lumière laser considérée.

5. Projecteur selon la revendication 4, **caractérisé en ce que** le diamètre de la section circulaire de chacune des différentes entrées fusionnées (14A, 16B, 16C, 16D) est supérieur à 4mm.

6. projecteur selon la revendication 3, **caractérisé en ce que** la section rectangulaire présente une longueur égale ou inférieure à une section d'entrée du tunnel intégrateur.

7. Projecteur selon l'une quelconque des revendications 1 à 6, **caractérisé en ce que** le faisceau de fibres optiques (16) comporte plusieurs milliers à plusieurs dizaines de milliers de fibres optiques de diamètre standard compris entre 100 et 200 microns.

8. Projecteur selon la revendication 1, **caractérisé en ce que** la plaque d'homogénéisation (20) comporte un angle de diffusion compris entre 2 et 10°.

9. Projecteur selon la revendication 8, **caractérisé en ce que** la plaque d'homogénéisation est fixée sur un support (150) solidaire du moteur de projection.

10. Projecteur d'éclairage selon l'une quelconque des revendications 1 à 9, **caractérisée en ce que** ladite pluralité de sources lumières lasers est de type RGB ou phosphore.

11. Projecteur selon l'une quelconque des revendications 1 à 10, **caractérisé en ce que** le moteur de projection comporte l'un des modulateurs de lumière suivants : matrice DMD, matrice LCD, matrices tri-LCD, matrices Tri-DMD, matrice Lcos et matrice D-ILA.

## Patentansprüche

1. Projektor, der eine Vielzahl von Laserlichtquellen (12) und einen Projektionsmotor (14) umfasst, der am Eingang mit einem Integrationstunnel (148) versehen ist, **dadurch gekennzeichnet, dass** die Vielzahl von Laserlichtquellen auf versetzte Weise mit dem Projektionsmotor über ein Bündel optischer Fasern (16) verbunden sind, das eine gleiche Vielzahl von Eingängen (16A, 16B, 16C, 16D) und einen einzigen Ausgang (16E) umfasst, wobei das Faserbündel im Bereich von jedem der Eingänge und dem einzigen Ausgang vereinigt ist, um die Faserzwischenräume davon zu beseitigen, und dadurch, dass jeder der so vereinigten Eingänge (16A, 16B, 16C, 16D) der Vielzahl von Eingängen des Bündels optischer Fasern (16) im Bereich einer Ausgangsbrennebene von jeder der Laserlichtquellen von der Vielzahl von Laserlichtquellen angeordnet ist und der so vereinigte einzige Ausgang (16E) des Bündels optischer Fasern (16) in direkten Kontakt mit einer Homogenisierungsplatte (20) gebracht wird, die sandwichartig zwischen dem vereinigten einzigen Ausgang (16E) und dem Eingang des Integrationstunnels (148) angeordnet ist.

2. Projektor nach Anspruch 1, **dadurch gekennzeichnet, dass** die verschiedenen vereinigten Eingänge (14A, 16B, 16C, 16D) und der einzige vereinigte Ausgang (16E) des Bündels optischer Fasern (16) jeweils eine numerische Apertur aufweisen, die größer als 0,26 ist und 0,37 oder größer erreichen kann.

3. Projektor nach Anspruch 1 oder Anspruch 2, **dadurch gekennzeichnet, dass** die verschiedenen vereinigten Eingänge (14A, 16B, 16C, 16D) des Bündels optischer Fasern (16) jeweils einen kreisförmigen Querschnitt aufweisen und der einzige vereinigte Ausgang (16E) des Bündels optischer Fasern einen rechtwinkligen Querschnitt aufweist.

4. Projektor nach Anspruch 3, **dadurch gekennzeichnet, dass** der kreisförmige Querschnitt einen Durchmesser aufweist, der größer als der Durchmesser der Ausgangsbrennebene der betrachteten Laserlichtquelle ist.

5. Projektor nach Anspruch 4, **dadurch gekennzeichnet, dass** der Durchmesser des kreisförmigen Querschnitts von jedem der verschiedenen vereinigten Eingänge (14A, 16B, 16C, 16D) größer als 4 mm ist.

6. Projektor nach Anspruch 3, **dadurch gekennzeichnet, dass** der rechtwinklige Querschnitt eine Länge aufweist, die gleich oder kleiner als ein Eingangsquerschnitt des Integrationstunnels ist.

7. Projektor nach einem der Ansprüche 1 bis 6, **dadurch gekennzeichnet, dass** das Bündel optischer Fasern (16) mehrere Tausend bis mehrere Zehntausend optische Fasern mit Standarddurchmesser von zwischen 100 und 200 Mikrometern umfasst.

8. Projektor nach Anspruch 1, **dadurch gekennzeichnet, dass** die Homogenisierungsplatte (20) einen Streuwinkel von zwischen 2 und 10° umfasst.

9. Projektor nach Anspruch 8, **dadurch gekennzeichnet, dass** die Homogenisierungsplatte an einem Träger (150) befestigt ist, der fest mit dem Projektionsmotor verbunden ist.

10. Beleuchtungsprojektor nach einem der Ansprüche 1 bis 9, **dadurch gekennzeichnet, dass** die Vielzahl von Laserlichtquellen vom Typ RGB oder Phosphor sind.

11. Projektor nach einem der Ansprüche 1 bis 10, **dadurch gekennzeichnet, dass** der Projektionsmotor einen der folgenden Lichtmodulatoren umfasst: DMD-Matrix, LCD-Matrix, Tri-LCD-Matrices, Tri-DMD-Matrices, Lcos-Matrix und D-ILA-Matrix.

## Claims

1. Projector including a plurality of laser light sources (12) and a projection engine (14) fitted, at the inlet, with an integrating tunnel (148), **characterized in that** said plurality of laser light sources is connected in an offset manner to the projection engine through a bundle of optical fibres (16) including the same plurality of inlets (16A, 16B, 16C, 16D) and a single outlet (16E), said bundle of fibres being fused at each of said inlets and said single outlet to eliminate inter-fibre spaces therefrom and **in that** each of said inlets, fused in this way (16A, 16B, 16C, 16D), of said plurality of inlets of the bundle of optical fibres (16) is disposed at a focal plane of the output of each of the laser light sources of said plurality of laser light sources and said single outlet, fused in this way (16E), of the bundle of optical fibres (16) is placed in direct contact with an homogenising plate (20) sandwiched between the single fused outlet (16E) of the bundle of optical fibres (16) and the inlet of the integrating tunnel (148).

2. Projector according to claim 1, **characterized in that** the different fused inlets (14A, 16B, 16C, 16D) and the single fused outlet (16E) of the bundle of optical fibres (16) each have a numerical aperture greater than 0.26 and that can reach 0.37 and more.

3. Projector according to claim 1 or claim 2, **characterized in that** the different fused inlets (14A, 16B, 16C, 16D) of the bundle of optical fibres (16) each have a circular cross-section and the single fused outlet (16E) of the bundle of optical fibres has a rectangular cross-section.

4. Projector according to claim 3, **characterized in that** the circular cross-section has a diameter greater than the diameter of the focal plane of the output of the laser light source considered.

5. Projector according to claim 4, **characterized in that** the diameter of the circular cross-section of each of the different fused inlets (14A, 16B, 16C, 16D) is greater than 4mm.

6. Projector according to claim 3, **characterized in that** the rectangular cross-section has a length equal to or less than an inlet cross-section of the integrating tunnel.

7. Projector according to any one of claims 1 to 6, **characterized in that** the bundle of optical fibres (16) includes several thousand to several tens of thousands of optical fibres with a standard diameter comprised between 100 and 200 microns.

8. Projector according to claim 1, **characterized in that** the homogenising plate (20) includes a diffusion angle comprised between 2 and 10°.

9. Projector according to claim 8, **characterized in that** the homogenising plate is fastened on a support (150) secured to the projection engine.

10. Lighting projector according to any one of claims 1 to 9, **characterized in that** said plurality of laser light sources is of the RGB or phosphorus type.

11. Projector according to any one of claims 1 to 10, **characterized in that** the projection engine includes one of the following light modulators: DMD array, LCD array, tri-LCD arrays, Tri-DMD arrays, Lcos array and D-ILA array.
